# EUROPEAN PATENT APPLICATION

(11) **EP 2 644 852 A1**
(43) Date of publication of application: **02.10.2013**
(21) Application number: 12162181.7
(22) Date of filing: 29.03.2012
(51) Int. Cl.: F01K 23/10, F02C 6/18, F02C 3/34, B01D 53/14

(54) **Method for operating a combined cycle power plant and combined cycle power plant for using such method**

(71) Applicant: Alstom Technology Ltd, 5400 Baden (CH)
(72) Inventor: Carroni, Richard, 5443 Niederrohrdorf (CH); Limoa, Alvin, 5432 Neuenhof (CH); Nugroho, Tjiptady, 5442 Fislisbach (CH); Agostinelli, Gian Luigi, 8048 Zürich (CH); Conte, Enrico, 8700 Küsnacht (CH); Berg, Klara, 5200 Brugg (CH); Dietzmann, Joerg, 5400 Baden (CH); Li, Hongtao, 5000 Aarau (CH)

(57) **Abstract**

The invention discloses a method for operating a combined cycle power plant (10) with an integrated CO2 capture unit (14), wherein flue gas of a gas turbine (11) is led along an flue gas path through a heat recovery steam generator (19), a flue gas cooling circuit (13) and a CO2 absorber (33).

A reduction in effort is achieved by operating the gas turbine (11) to have a backpressure (p1) at its exit, which compensates most or all of the pressure loss of the flue gas along the flue gas path.

## Description

### Background of the Invention

The present invention relates to the technology of combined cycle power plants with CO2 capture and storage capability. It refers to a method for operating a combined cycle power plant according to the preamble of claim 1. It further refers to a combined cycle power plant for using the method.

### Prior Art

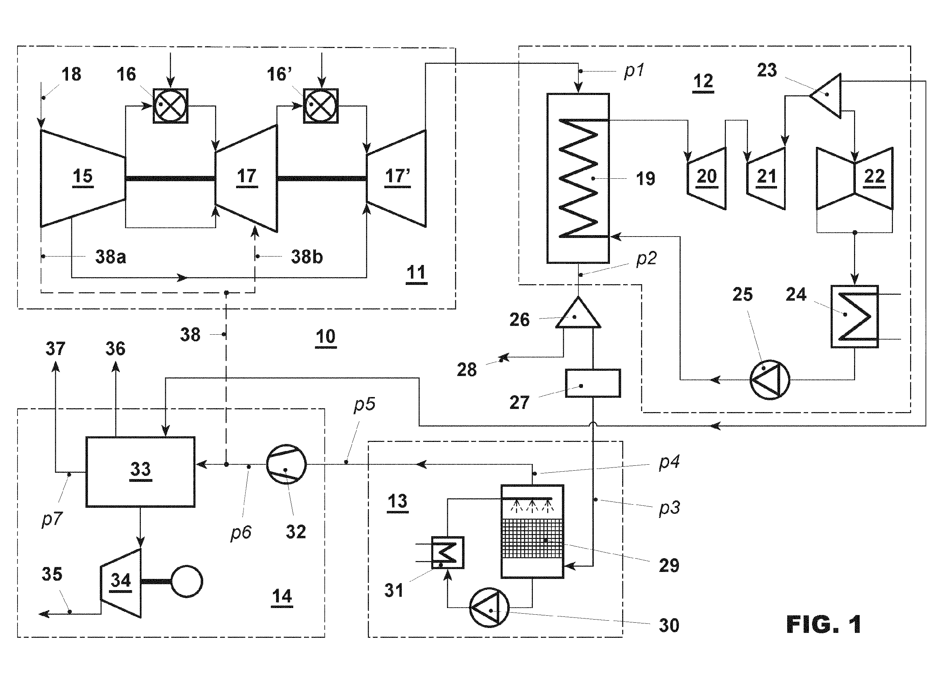

Fig. 1 shows a simplified diagram of a combined cycle power plant (CCPP) with an integrated carbon capture and storage (CCS) facility. The combined cycle power plant 10 of Fig. 1 comprises a gas turbine 11, the water/steam cycle 12, a flue gas cooling circuit 13 and a CO2 capture unit 14.

The gas turbine 11 -wherein a gas turbine can be used with any combustion system- is of the sequential combustion type and comprises a compressor 15, which compresses ambient air 18, a first combustor 16, a first turbine 17, a second combustor 16' and a second turbine 17'. The exhaust gas of the second turbine 17' passes a heat recovery steam generator 19, which is part of the water/steam cycle 12. The heat of the exhaust gas is used to generate steam within the heat recovery steam generator 19. The steam drives a set of steam turbines, which comprises a high-pressure steam turbine 20, an intermediate-pressure steam turbine 21 and a low-pressure steam turbine 22. The steam, which exits the low-pressure steam turbine 22, is condensed in the condenser 24, and the resulting water is pumped back to the heat recovery steam generator 19 by means of feedwater pump 25.

In case that a flue gas recirculation is provided, a flue gas recirculation path 38 (dashed in Fig. 1) leads from the CO2 capture unit 14 to the inlet of the gas turbine 11,

The typical pressures p1 to p7 at various points of the power plant 10 according to Fig. 1 are:

| | |
|---|---|
| p1 (gas turbine back-pressure) | 35mbar |
| p2 (HRSG exit) | 0mbar |
| p3 (after louvre damper 27) | -5mbar |
| p4 (at cooler exit) | -25mbar |
| p5 (at blower inlet) | -30mbar |
| p6 (at blower exit) | 65mbar |
| p7 (at absorber exit) | 0mbar. |

In a power plant configuration as shows in Fig. 1, the required power for the blower 32 can be of the order of several MW (e.g. 8.5MW). This has a large, negative impact on plant performance, when CO2 is captured. Furthermore, blower efficiency typically falls significantly when running off-design, meaning that part-load operation is penalized.

The capture rate of the CO2 capture unit 14 is also affected by deviation from the design point. As a concrete example, the capture rate falls to 90% CO2, typically to around 85%, at the higher ambient temperatures encountered in summer. Guaranteeing 90% CO2 capture at all times of the year would entail over-designing the capture unit, leading to excessive costs and performance penalties.

An extreme off-design condition driving the overall system design is a gas turbine trip. Investigations have shown that the long run-out time of the blower 32 results in a strong vacuum in the upstream flue gas path (up to 100mbar below ambient), thereby causing structural damage.

Within a combined cycle power plant with carbon capture and storage flue gas must be transported from the exhaust of the HRSG 19 to the absorber 33 of the CO2 capture unit 14. Traditionally, the blower 32 is utilized to overcome all the pressure losses in the flue gas path, thereby enabling the gas turbine 11 to operate at design conditions (i.e. a standard gas turbine exit pressure of typically 35mbar). The absorber pressure is essentially atmospheric. In this example, the blower head is approximately 100mbar.

Prior art regarding similar configurations recommends improving the CO2 capture efficiency by increasing the pressure in the absorber of the CO2 capture unit.

Document EP 1 688 173 A2 1 proposes using a blower to achieve this goal. In detail, a carbon dioxide recovery system is disclosed comprising a turbine which is driven and rotated by steam, a boiler which generates the steam supplied to the turbine, a carbon dioxide absorption tower which absorbs and removes carbon dioxide from a combustion exhaust gas of the boiler by an absorption liquid, and a regeneration tower which heats and regenerates a loaded absorption liquid with carbon dioxide absorbed therein. The regeneration tower is provided with plural loaded absorption liquid heating means in multiple stages, which heat the loaded absorption liquid and remove carbon dioxide in the loaded absorption liquid. The turbine is provided with plural lines which extract plural kinds of steam with different pressures from the turbine and which supply the extracted plural kinds of steam to the plural loaded absorption liquid heating means as their heating sources. The plural lines are connected to make the pressure of supplied steam increased from a preceding stage of the plural loaded absorption liquid heating means to a post stage of the plural loaded absorption liquid heating means.

Further, on the combustion exhaust gas outlet side of the boiler, a deflating blower which pressurizes of a combustion exhaust gas, a cooler which cools the combustion exhaust gas, and a CO2 absorption tower which is filled with CO2 absorption liquid for absorbing and removing CO2 from the combustion exhaust gas are successively arranged in this sequence from the side of the boiler.

Document WO 2008090168 A1 teaches the use of the gas turbine to increase the absorber pressure. In detail, it discloses a process for reducing CO2 emission in a power plant, wherein the power plant comprises at least one gas turbine coupled to a heat recovery steam generator unit and the CO2 capture unit comprises an absorber and a regenerator, the process comprising the steps of: (a) introducing hot exhaust gas exiting a gas turbine having a certain elevated pressure into a heat recovery steam generator unit to produce steam and a flue gas stream comprising carbon dioxide; (b) removing carbon dioxide from the flue gas stream comprising carbon dioxide by contacting the flue gas stream with absorbing liquid in an absorber having an elevated operating pressure to obtain absorbing liquid enriched in carbon dioxide and a purified flue gas stream, wherein the settings and/or construction of the gas turbine are adjusted such that the hot exhaust gas exiting the gas turbine has a pressure of at least 40% of the elevated operating pressure of the absorber. A blower for the exhaust gas is not used.

### Summary of the Invention

It is an object of the present invention to provide a method for operating a combined cycle power plant with integrated carbon capture and storage unit, which substantially reduces the effort necessary in the carbon capturing part of the power plant.

It is a further object of the invention to disclose a combined cycle power plant with an integrated CO2 capture unit for using the method according to the invention.

These and other objects are obtained by a method according to claim 1 and a combined cycle power plant according to claim 7.

The inventive method for operating a combined cycle power plant with an integrated CO2 capture unit, wherein flue gas of a gas turbine is led along an flue gas path through a heat recovery steam generator, a flue gas cooling circuit and a CO2 absorber, is characterized in that the gas turbine is operated to have a back-pressure at its exit, which compensates most or all of the pressure loss of the flue gas along the flue gas path.

According to an embodiment of the invention the gas turbine is operated to have a back-pressure at its exit, which compensates all of the pressure loss of the flue gas along the flue gas path.

Especially, the gas turbine is operated with a back-pressure of 150mbar to approximately 250mbar.

According to another embodiment of the invention the gas turbine is operated to have a back-pressure at its exit, which compensates most of the pressure loss of the flue gas along the flue gas path, and that the remaining pressure loss is compensated by a blower being arranged in the flue gas path.

Especially, the gas turbine is operated with a back-pressure of approximately 100mbar, and the blower is operated with a duty of approximately 50mbar.

According to another embodiment of the invention at least part the flue gas is recirculated to the inlet of the gas turbine on a flue gas recirculation path, and that the pressure loss of the flue gas along the flue gas recirculation path is completely compensated by the back-pressure of the gas turbine.

The combined cycle power plant with integrated CO2 capture unit according to the invention comprises a gas turbine, a water/steam cycle with a heat recovery steam generator, through which the flue gas of the gas turbine flows along a flue gas path, which comprises a flue gas cooling unit downstream of the heat recovery steam generator and a CO2 absorber downstream of the flue gas cooling unit, whereby the gas turbine is designed to be operated with a back-pressure, which compensates most or all of the pressure loss of the flue gas along the flue gas path.

According to an embodiment of the invention a blower is arranged in said flue gas path, the duty of which is smaller than the back-pressure of the gas turbine.

According to another embodiment of the invention a flue gas recirculation path is provided for recirculating flue gas back to the inlet of the gas turbine, and that the gas turbine is designed to be operated with a back-pressure, which compensates the pressure loss of the flue gas along the flue gas recirculation path.

### Brief Description of the Drawings

The present invention is now to be explained more closely by means of different embodiments and with reference to the attached drawing.
- Fig. 1: shows a simplified diagram of a combined cycle power plant with integrated CO2 capture and storage capabilities, which can be used with the invention.

### Detailed Description of different Embodiments of the Invention

The present invention proposes to reduce the duty of the flue gas blower (from 100 to around 50mbar) and at the same time to increase the gas turbine back-pressure (p1 in Fig. 1, from 40 to approximately 100mbar), compared to the state of the art configuration shown in Fig. 1. Such a configuration permits an increase in overall net performance (because the gas turbine compressor 15 is more efficient than the blower 32) and reduces cost.

Furthermore, such a kind of operation permits additional, desirable features:
● Slightly increasing the absorber pressure (above the standard atmospheric pressure) when the capture unit runs off-design (e.g. on hot days), so as to maintain the design CO2 capture rate without having to overdesign the unit. This can be achieved by a blower equipped with efficient mass flow control, e.g. inlet guide vanes (where efficiency varies slightly over the load range 80-100%) or variable pitch blades (high efficiency over much larger load range), adjusting the guide vanes (or blade pitch) permits maximum load when the higher absorber pressure is requested.
● Purging functions.
● Standard gas turbines can be used (no large modifications needed for 100mbar back-pressure).
● The vacuum normally created (in the flue gas path) due to a gas turbine trip, is much smaller.

### First embodiment:

According to a first embodiment of the invention it is proposed to completely eliminate the flue gas blower 32 and to operate the gas turbine 11 at a higher back-pressure (e.g. 150mbar would be suitable in the CCPP/CCS plant of Fig. 1) in order to transport the exhaust gas to the CO2 capture unit 14. The absorber pressure remains approximately constant at a given gas turbine operating point. This embodiment is ideal for system simplification and cost reduction.

Thermodynamic calculations, heat balances and cost assessments for the above-described plant of Fig. 1 conclude that implementing the invention results in the following benefits:
● Overall plant output is 3.2MW higher.
● Hardware costs are reduced substantially.
● Removing the blower leads to a more robust and more easily controllable system.
● The problem of vacuum creation during a gas turbine trip is completely avoided.

### Second embodiment:

The inventive concept can also be used in a CCPP/CCS employing flue gas recirculation. In this case, the gas turbine back-pressure is increased by approximately 30mbar (corresponding to the pressure loss along the flue gas recirculation path 38 and subordinated paths 38a, 38b to the gas turbine 11) A small blower 32 is used for the CCS stream, to overcome the pressure losses induced by the CO2 capture unit 14.

After having passed the heat recovery steam generator 19, the exhaust gas is divided in a subsequent stack damper 26 into a first part, which enters a stack 28, and a second part, which passes a louvre damper 27 and enters the flue gas cooling circuit 13, where it is cooled down in a cooler 29. The cooler 29 as part of the cooling water circuit comprising a heat exchanger 31 and a pump 30.

After being cooled down, the exhaust gas is fed by means of a blower 32 into a CO2 absorber 33 within the CO2 capture unit 14. The captured CO2 leaves the CO2 absorber 33 to be compressed by means of a compressor 34. The compressed CO2 35 is then ready to be stored.

The CO2 absorber 33 is operated with steam extracted with low pressure at a steam extraction 23 between intermediate-pressure steam turbine 21 and low-pressure steam turbine 22. Remaining gas from the absorber 33 is conducted to a stack 37, while condensate 36 is fed back into the water/steam cycle 12.

### List of Reference Numerals

- 10: Combined cycle power plant (CCPP)
- 11: Gas turbine (with sequential combustion)
- 12: Water/steam cycle
- 13: Flue gas cooling circuit
- 14: CO2 capture unit
- 15: Compressor
- 16,16': Combustor
- 17,17': Turbine
- 18: Ambient air
- 19: Heat recovery steam generator (HRSG)
- 20: High-pressure steam turbine (HP)
- 21: Intermediate-pressure steam turbine (IP)
- 22: Low-pressure steam turbine (LP)
- 23: Steam extraction
- 24: Condenser
- 25: Feedwater pump
- 26: Stack damper
- 27: Louvre damper
- 28,37: Stack
- 29: Cooler
- 30: Pump
- 31: Heat exchanger
- 32: Blower
- 33: CO2 absorber
- 34: Compressor
- 35: CO2
- 36: Condensate
- 38: Flue gas recirculation path
- 38a, 38b: Subordinated flue gas recirculation paths

## Claims

1. Method for operating a combined cycle power plant (10) with an integrated CO2 capture unit (14), wherein flue gas of a gas turbine (11) is led along an flue gas path through a heat recovery steam generator (19), a flue gas cooling circuit (13) and a CO2 absorber (33), **characterized in that** the gas turbine (11) is operated to have a back-pressure (p1) at its exit, which compensates most or all of the pressure loss of the flue gas along the flue gas path.

2. Method according to claim 1, **characterized in that** the gas turbine (11) is operated to have a back-pressure (p1) at its exit, which compensates all of the pressure loss of the flue gas along the flue gas path.

3. Method according to claim 2, **characterized in that** the gas turbine (11) is operated with a back-pressure (p1) of 150 to approximately 250mbar.

4. Method according to claim 1, **characterized in that** the gas turbine (11) is operated to have a back-pressure (p1) at its exit, which compensates most of the pressure loss of the flue gas along the flue gas path, and that the remaining pressure loss is compensated by a blower (32) being arranged in the flue gas path.

5. Method according to claim 4, **characterized in that** the gas turbine (11) is operated with a back-pressure (p1) of approximately 100mbar, and the blower (32) is operated with a duty (p6-p5) of approximately 50mbar.

6. Method according to one of the claims 1-5, **characterized in that** at least part the flue gas is recirculated to the inlet of the gas turbine (11) on a flue gas recirculation path (38), and that the pressure loss of the flue gas along the flue gas recirculation path (38) is completely compensated by the back-pressure (p1) of the gas turbine (11).

7. Combined cycle power plant (10) with an integrated CO2 capture unit (14) for using the method according to one of the claims 1-6, comprising a gas turbine (11), a water/steam cycle (12) with a heat recovery steam generator (19), through which the flue gas of the gas turbine (11) flows along a flue gas path, which comprises a flue gas cooling unit (13) downstream of the heat recovery steam generator (19) and a CO2 absorber (33) downstream of the flue gas cooling unit (13), **characterized in that** the gas turbine (11) is designed to be operated with a back-pressure (p1), which compensates most or all of the pressure loss of the flue gas along the flue gas path.

8. Combined cycle power plant according to claim 7, **characterized in that** a blower (32) is arranged in said flue gas path, the duty (p6-p5) of which is smaller than the back-pressure (p1) of the gas turbine (11).

9. Combined cycle power plant according to claim 7 or 8, **characterized in that** a flue gas recirculation path (38) is provided for recirculating flue gas back to the inlet of the gas turbine (11), and that the gas turbine (11) is designed to be operated with a back-pressure (p1), which compensates the pressure loss of the flue gas along the flue gas recirculation path (38).

10. Combined cycle power plant according to claim 9, **characterized in that** the flue gas recirculation (38) is provided for recirculating flue gas to at least one inlet (38a, 38b) of the gas turbine (11).
